# EUROPÄISCHE PATENTANMELDUNG

(11) **EP 3 369 876 A1**
(43) Veröffentlichungstag der Anmeldung: **05.09.2018**
(21) Anmeldenummer: 17158812.2
(22) Anmeldetag: 02.03.2017
(51) Int. Cl.: E04G 21/04, B66C 23/78

(54) **TRAGSTRUKTUR MIT INTEGRIERTEM KESSEL FÜR EINE MOBILE BETONPUMPE UND MOBILE BETONPUMPE**

(71) Anmelder: Putzmeister Engineering GmbH, 72631 Aichtal (DE)
(72) Erfinder: Benz, Andreas, 73240 Wendlingen (DE); Flügel, Dietmar, 72649 Wolfschlugen (DE)
(74) Vertreter: Glawe, Delfs, Moll

(57) **Zusammenfassung**

Die Erfindung betrifft eine Tragstruktur (10) für eine mobile Betonpumpe (1) sowie eine mobile Betonpumpe (1) mit entsprechender Tragstruktur (10).

Die erfindungsgemäße Tragstruktur (10) für eine mobile Betonpumpe (1) zur Anbindung eines Verteilermastes (2) umfasst zwei diagonal einander kreuzende Stützbeinkästen (13), und einem daran befestigten Mastbock (15) mit einen Kessel (16), der eine Öffnung (17) aufweist, die an ihrem einen Ende wenigstens teilweise von einer Aufnahme (18) für ein Drehlager (19) zum Verschwenken des Verteilermastes (2) der Betonpumpe (1) gegenüber dem Kessel (16) umgeben ist. Je ein Teil der Bewandung des Kessels (16) ist durch eine Seitenwand (20) der einander kreuzenden Stützbeinkästen (13) gebildet, wobei die Seitenwände (20) der Stützbeinkästen (13) im einem ersten Bereich, in dem sie einen Teil der Bewandung des Kessels (16) bilden, derart frei von Fügestellen ist, dass über den Kessel (16) unmittelbar in die Seitenwände (13) eingeleitete Belastungen über den ersten Bereich hinaus ohne Scherbelastung einer Fügestelle in den Seitenwänden (13) verteilt werden.

Die erfindungsgemäße mobile Betonpumpe (1) umfasst eine erfindungsgemäße Tragstruktur (10).

## Beschreibung

Die Erfindung betrifft eine Tragstruktur für eine mobile Betonpumpe sowie eine mobile Betonpumpe mit entsprechender Tragstruktur.

Mobile Betonpumpen verfügen regelmäßig über einen auf einem fahrbaren Unterbau - in der Regel einem LKW-Chassis - angeordneten und gegenüber dem Unterbau verschwenkbaren Ausleger mit einer daran entlanggeführten Förderleitung, durch die fließfähiger Beton mit Hilfe einer am Unterbau angeordneten Betonpumpe gefördert werden kann. Der Ausleger umfasst dabei über mehrere Auslegerarme, die um Achsen jeweils quer zur Längsrichtung des Auslegerarms relativ zueinander verschwenkt werden können.

Um die Stabilität der Betonpumpe bei Verwendung zu gewährleisten, ist der Ausleger über eine Tragstruktur mit dem LKW-Chassis verbunden. Die Tragstruktur umfasst dabei Stützbeine, mit denen sie so auf dem Untergrund abgestützt werden kann, dass die durch den Auslegerarm verursachte Lastmomente ausschließlich über die Stützbeine, nicht aber über das LKW-Chassis in den Untergrund eingeleitet werden.

Für mobile Betonpumpen sind Tragstrukturen mit - in Fahrrichtung des LKW-Chassis gesehen - zwei vorderen teleskopierbaren Stützbeinen und zwei hinteren schwenkbaren Stützbeinen bekannt. Die vorderen Stützbeine sind dabei in sich in Draufsicht x-förmig kreuzenden Stützbeinkästen der Tragstruktur angeordnet, an der auch die hinteren Stützbeine schwenkbar angebunden sind.

Der Ausleger ist über einen sogenannten Kessel an die Tragstruktur angebunden. Der Kessel umfasst dabei einen Hohlkörper mit einem an dessen Oberseite angeordnetem Lager zur drehbaren Anbindung des Auslegers. Der Kessel ist dabei in Fahrrichtung des LKW-Chassis vor dem Kreuzungspunkt der Stützbeinkästen angeordnet und in der Regel unmittelbar mit den Stützbeinkästen verbunden.

Die Verbindung des Kessels mit der übrigen Tragstruktur erfolgt in der Regel durch Fügen, insbesondere durch Schweißen. Aufgrund der hohen Belastung durch den Ausleger, die über die Schweißnähte abgeleitet werden müssen, sind diese Schweißnähte besonders sorgfältig auszuführen und zu prüfen, was ihre Herstellung aufwendig und teuer macht. Dies gilt auch für die Schweißnähte an evtl. vorgesehenen Stütz- oder Verstärkungsrippen.

In der WO 2014/029552 ist eine Tragstruktur für eine mobile Betonpumpe beschrieben, bei welcher der Kessel einen Mehrkantumriss aufweist und eine daran angepasste Mehrkantöffnung in der Tragstruktur eingepasst ist. Teile des Kessels können dabei fluchtend mit einer Seitenwand eines Stützbeinkastens angeordnet sein und diese abschnittsweise ersetzen. Auch wenn die Krafteinleitung in die Tragstruktur bei einem Kessel gemäß WO 2014/029552 gegenüber dem sonstigen Stand der Technik bereits verbessert ist, müssen die für die unmittelbare Anbindung des Kessels an die Tragstruktur erforderlichen wenigstens vier Schweißnähte weiterhin besonders belastungsfest ausgestaltet sein. Auch Schweißnähte für evtl. vorgesehenen Stütz- oder Verstärkungsrippen sind stark beansprucht.

Aufgabe der vorliegenden Erfindung ist es, eine gegenüber dem Stand der Technik verbesserte Tragstruktur für eine mobile Betonpumpe sowie eine mobile Betonpumpe zu schaffen.

Gelöst wird diese Aufgabe durch eine Tragstruktur gemäß dem Hauptanspruch sowie eine Betonpumpe gemäß dem nebengeordneten Anspruch 9. Vorteilhafte Weiterbildungen sind Gegenstand der abhängigen Ansprüche.

Demnach betrifft die Tragstruktur für eine mobile Betonpumpe zur Anbindung eines Verteilermastes umfassend zwei diagonal einander kreuzende Stützbeinkästen, und einem daran befestigten Mastbock mit einen Kessel, der eine Öffnung aufweist, die an ihrem einen Ende wenigstens teilweise von einer Aufnahme für ein Drehlager zum Verschwenken des Verteilermastes der Betonpumpe gegenüber dem Kessel umgeben ist, wobei je ein Teil der Bewandung des Kessels durch eine Seitenwand der einander kreuzenden Stützbeinkästen gebildet ist, und wobei die Seitenwände der Stützbeinkästen jeweils im dem ersten Bereich, in dem sie einen Teil der Bewandung des Kessels bilden, derart fügestellenfrei sind, dass über den Kessel in die Seitenwände eingeleitete Belastungen über den ersten Bereich hinaus ohne eine Scherbelastung einer Fügestelle in den Seitenwänden verteilt werden.

Weiterhin betrifft die Erfindung eine mobile Betonpumpe umfassend einer auf einem fahrbaren Unterbau befestigten Tragstruktur mit an der Tragstruktur angeordneten ausfahrbaren Stützbeine zum Abstützen der Betonpumpe auf dem Boden und einem drehbar an der Tragstruktur gelagerten Verteilermast, wobei die Tragstruktur erfindungsgemäß ausgestaltet ist.

Zunächst werden einige in Zusammenhang mit der Erfindung verwendete Begriffe erläutert:
Ein Bauteil oder ein Bereich eines Bauteils gilt dann als "fügestellenfrei", wenn das Bauteil als Ganzes oder zumindest in dem fraglichen Bereich nicht aus mehreren, zuvor getrennten und nur durch Fügestellen verbundenen Werkstücken besteht. Ist ein erstes Bauteil über Fügestellen mit einem weiteren Bauteil verbunden, wird das erste Bauteil unter den genannten Voraussetzungen hingegen weiterhin als fügestellenfrei im Sinne der Erfindung angesehen.

Ein Bauteil gilt als "derart frei von Fügestellen, sodass bei vorgegebener Belastung keine Scherbelastung an Fügestellen des Bauteils auftritt", wenn bei einer vorgegebenen Belastung der Kraftfluss durch das Bauteil evtl. vorgesehene Fügestellen im Wesentlichen nur orthogonal kreuzt und also keine Belastung in Scherungsrichtung an den Fügestellen auftritt.

Indem ein Teil der Bewandung des Kessels unmittelbar durch je eine Seitenwand der Stützbeinkästen gebildet wird, wird zumindest ein Teil der durch den Verteilermast auf den Kessel eingetragenen Belastung unmittelbar - d.h. insbesondere nicht über scherbelastete Fügestellen - in die Seitenwände eingeleitet. Dabei sind die Seitenwände erfindungsgemäß derart fügestellenfrei, dass der in eine Seitenwand unmittelbar eingeleitete Teil der Belastungen sich über denjenigen ersten Bereich der Seitenwand, der unmittelbar einen Teil der Kesselbewandung bilden, hinaus in der Seitenwand und somit in die Stützbeinkästen verteilt wird, wobei keinerlei Fügestelle - bspw. eine Schweißnaht - in der Seitenwand selbst vorgesehen wäre, die aufgrund der Belastung durch den Verteilermast auf Scherung beansprucht werden würde. In der typischen Einbausituation einer Tragstruktur bedeutet dies, dass in dem genannten Bereich der Seitenwände insbesondere keine vertikalen Fügestellen vorgesehen sind. Die Krafteinleitung in die fraglichen Seitenwände der Stützbeinkästen und damit in die Stützbeinkästen insgesamt, ist deshalb vorteilhaft, wobei die genannten Seitenwände selbstverständlich über Fügestellen mit den übrigen Wänden der Stützbeinkästen oder sonstigen Bauteilen verbunden sein können.

Gegenüber dem Stand der Technik mit einer durchgehenden Kesselbewandung muss bei der erfindungsgemäßen Lösung also insbesondere nicht der gesamte wirkende Kraftfluss über eine oder mehrere stark auf Scherung beanspruchte Schweißnähte, mit denen der Kessel an die Tragstruktur angebunden ist, in die Tragstruktur übertragen werden. Vielmehr wird erfindungsgemäß ein Teil der Belastung bereits unmittelbar über die Seitenwände der Stützbeinkästen in die Tragstruktur eingeleitet. Der von den Teilen des Kessels, die nicht unmittelbar durch die Seitenwände der Stützbeinkästen gebildet sind, in die Tragstruktur zu übertragende Kraftfluss stellt demnach ebenfalls nur ein Teil der gesamten Belastung dar. Sämtliche in diesem Pfad des Kraftflusses angeordnete Fügestellen, wie bspw. Schweißnähte, sind demzufolge auch nur geringer belastet als die Schweißnähte im Stand der Technik und können in der Folge kostengünstiger ausgeführt werden.

Es ist bevorzugt, wenn die Seitenwände der Stützbeinkästen vollständig frei von Fügestellen sind, die durch die über den Kessel unmittelbar in die Seitenwände eingeleitete Belastungen auf Scherung belastet werden. In anderen Worten soll in den Seitenwände nicht nur unmittelbar in dem Bereich, in denen sie Teil der Kesselbewandung bilden, sondern insgesamt auf solche Fügestellen verzichtet werden, die durch die Belastung, die über den Bereich der einen Teil der Bewandung des Kessels in die Seitenwand eingebracht werden, auf Scherung belastet werden würden.

Vorzugsweise sind die beiden jeweils Teile der Bewandung des Kessels bildenden Seitenwände der Stützbeinkästen über eine gemeinsame Stoßkante unmittelbar miteinander verbunden. Die Seitenwände der Stützbeinkästen sind also derart geformt, dass sie bei zusammengesetzter Tragstruktur im Bereich der Kesselbewandung aneinanderstoßen, womit u.a. auch die Bewandung des Kessels in diesem Bereich geschlossen wird. Um die Tragfähigkeit und Steifigkeit der Tragstruktur insgesamt zu erhöhen, ist es dabei vorteilhaft, die beiden Seitenwände an eben dieser Stoßkante miteinander zu verbinden, bspw. durch Fügen bzw. Schweißen. Die so entstehende Fügestelle verbindet die beiden Seitenwände, die selbst aber weiterhin in den erfindungsgemäß vorgesehenen Bereichen fügestellenfrei bleiben.

Alternativ ist es möglich, dass zwischen den beiden Seitenwänden ein Übergangsblech vorgesehen ist, der einen Teil der Bewandung des Kessels bildet. Das Übergangsblech kann durch Fügen mit den beiden Seitenwänden verbunden werden, um die Steifigkeit der Tragstruktur weiter zu verbessern. Die Seitenwände bleiben dabei jedoch weiterhin frei von auf Scherung belastete Fügestellen im Sinne der Erfindung.

Es ist bevorzugt, wenn wenigstens eine, vorzugsweise beide Seitenwände über den jeweiligen Stützbeinkasten hinaus fügestellenfrei bis zur Aufnahme des Kessels für das Drehlager erstrecken. Befindet sich die Aufnahme des Kessels für das Drehlager oberhalb der Stützbeinkästen, ragen die Seitenwände erfindungsgemäß über die jeweiligen Stützbeinkästen hinaus bis zur Aufnahme für das Drehlager. Ist dieser über die Stützbeinkästen ragende Teil der Seitenwände vollständig fügestellenfrei, erhöht dies die Stabilität der Tragstruktur.

Dabei ist bevorzugt, wenn die Formgebung der über den Stützbeinkasten hinaus erstreckenden Teile der Seitenwände eine möglichst geringe Kerbwirkung aufweist. Die fraglichen Teile der Seitenwände sollen also derart geformt sein, dass ungünstig hohe Spannungsspitzen in den Seitenwänden, die zu deren Beschädigungen führen könnten, durch geeignete Formgebung möglichst vermieden werden.

Vorzugsweise ist die Wandung des Kessels in den Bereichen, abseits der durch die Seitenwände der Stützbeinkästen gebildeten Bereiche, durch ein einstückiges ein- oder mehrfach gekantetes oder gerundetes Blech gebildet ist, wobei das Blech vorzugsweise durch Schweißen mit den Stützbeinkästen verbunden ist. Indem der Kessel abseits der Seitenwände durch ein einstückiges Blech gebildet ist, kann die Anzahl der auf Scherung belasteten Fügestellen im Bereich des Kessels auf ein Minimum reduziert werden. Die Verbindungen zwischen dem genannten Blech und den Seitenwänden können grundsätzlich durch beliebige Fügeverfahren hergestellt werden, bevorzugt ist jedoch eine Schweißverbindung.

Die Aufnahme für ein Drehlager als, vorzugsweise vollständig umlaufender Lagerflansch ausgebildet ist, der vorzugsweise auf der Bewandung des Kessels aufliegt und mit diesem weiter vorzugsweise verschweißt ist. Indem die Aufnahme als umlaufender Lagerflansch ausgebildet ist, ist eine vorteilhafte Krafteinleitung in den Kessel bzw. deren Bewandung gewährleistet. Die Schweißnaht zwischen der Aufnahme für das Drehlager und der Bewandung des Kessels ist dabei regelmäßig nicht auf Scherung belastet.

Zur Erläuterung der erfindungsgemäßen Betonpumpe wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: eine Seitenansicht eines ersten Ausführungsbeispiels einer erfindungsgemäßen Betonpumpe mit erfindungsgemäßer Tragstruktur;
- Figur 2:: eine Draufsicht der Betonpumpe aus Figur 1 ohne Verteilermast;
- Figur 3:: eine Explosionsdarstellung der Tragstruktur der Betonpumpe gemäß Figuren 1 und 2;
- Figur 4a, b:: Detaildarstellungen der Tragstruktur aus Figur 3;
- Figur 5:: eine erste Ausführungsvariante der Tragstruktur gemäß Figuren 3 und 4; und
- Figur 6:: eine zweite Ausführungsvariante der Tragstruktur gemäß Figuren 3 und 4.

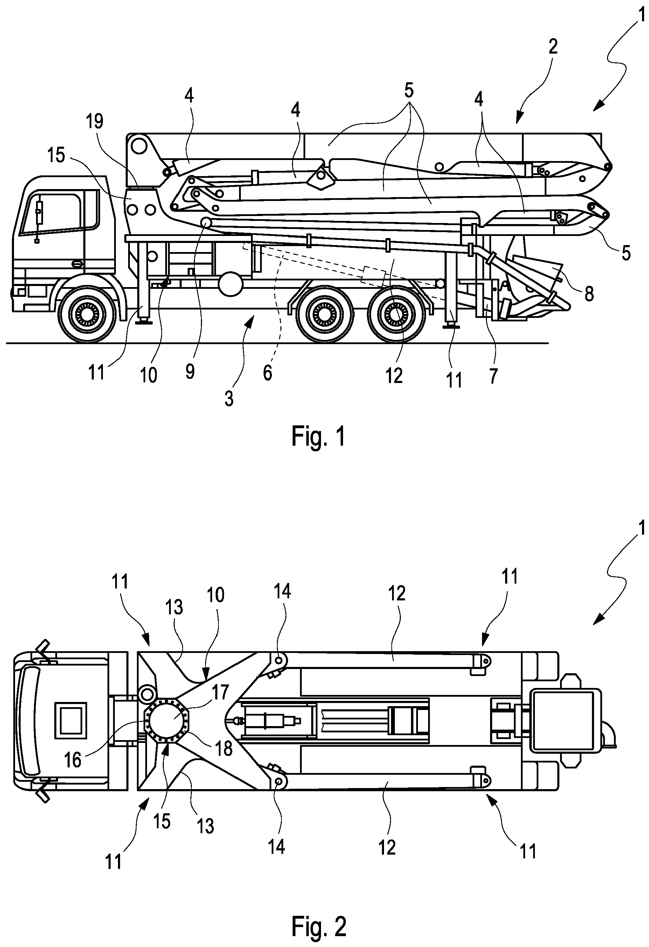

Bei der in Figuren 1 und 2 dargestellten mobilen Betonpumpe 1 mit Verteilermast 2 ist der Verteilermast 2 (nur in Figur 1 dargestellt) drehbar auf einem fahrbaren Unterbau 3 befestigt ist. Der Verteilermast 2 umfasst mehrere, durch Hydraulikzylinder 4 ausklappbare Teile 5, in denen eine (nur teilweise dargestellte) Förderleitung 6 für fließfähigen Beton geführt ist. Mit Hilfe einer am Unterbau 3 angeordneten Betonpumpe 7 kann fließfähiger Beton vom Aufgabetrichter 8 durch die Förderleitung 6 mit zum freien offenen Ende 9 der Förderleitung 6 gefördert werden.

Um die Stabilität der Betonpumpe 1 bei ihrer Verwendung - und damit insbesondere dem Ausfahren und/oder Verschwenken des Verteilermastes 2 - zu gewährleisten, ist der Verteilermast 2 über eine Tragstruktur 10 mit dem Unterbau verbunden. An der Tragstruktur 10 sind insgesamt vier Stützbeine 11 vorgesehen, von denen sich die beiden vorderen Stützbeine 11 teleskopartig ausstellen lassen und sich die beiden hinteren Stützbeine 11 über Auslegerarme 12 seitlich ausschwenken lassen. Die Tragstruktur 10 weist dazu zwei sich diagonal einander kreuzende Stützbeinkästen 13, in denen die Teleskoprohre für die vorderen Stützbeine 11 angeordnet sind, sowie Lagerpunkte 14 für die Auslegerarme 12 auf.

Zur drehbaren Anbindung des Verteilermastes 2 an dem Unterbau 3 ist ein Mastbock 15 vorgesehen, der an der Tragstruktur 10 befestigt ist. Der Mastbock 15 umfasst einen Kessel 16 mit Öffnung 17, durch den die Förderleitung 6 von der Betonpumpe 7 zum Verteilermast 2 geführt wird. An dem einen Ende der Öffnung 17 weist der Kessel 16 eine Aufnahme 18 für ein Drehlager 19 auf, mit dem der Verteilermast 2 letztendlich gegenüber dem Unterbau 3 verschwenkt werden kann.

Indem der Mastbock 15 unmittelbar Teil der Tragstruktur 10 ist, ist gewährleistet, dass die durch den Verteilermast 2 eingebrachten Belastungen unmittelbar über die Tragstruktur 10 und die ausgefahrenen Stützbeine 11 in den Untergrund eingeleitet werden können, ohne dass der Unterbau 3 der Betonpumpe 1 belastet werden würde.

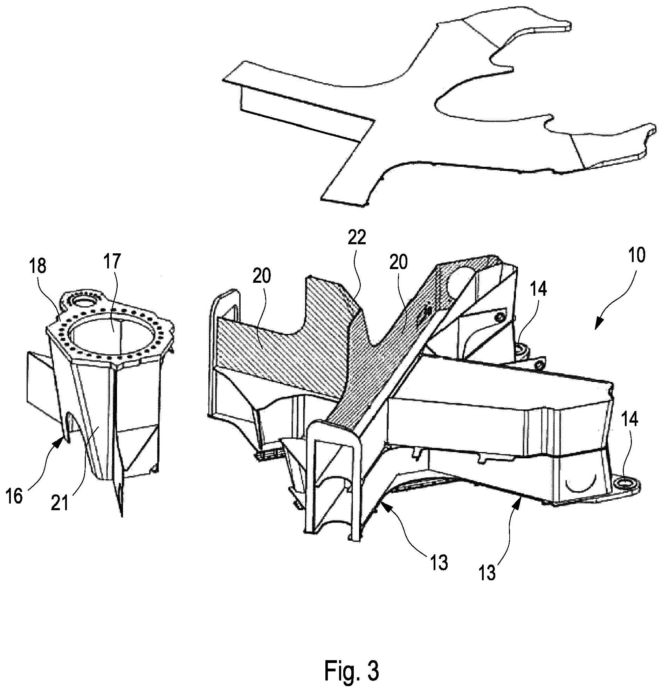

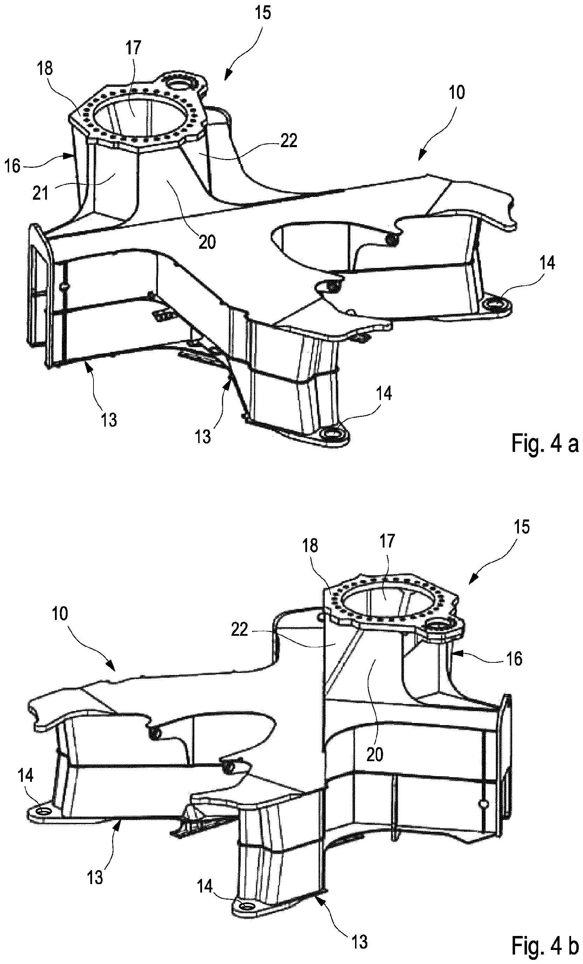

In Figuren 3 und 4a, b ist die Tragstruktur 10 der Betonpump 1 im Detail dargestellt. In Figur 3 sind zur Veranschaulichung Teile des Kessels 16 und der Stützbeinkästen 13 von den übrigen Teilen der Tragstruktur 10 beabstandet abgebildet. Figur 4a, b zeigt die Tragstruktur 10 in vollständig zusammengesetzten Zustand.

Die sich diagonal kreuzenden Stützbeinkästen 13 der Tragstruktur sind zweistöckig aufgebaut, sodass in den Stützbeinkästen 13 jeweils ein Teleskoprohr in unterschiedlichen Ebenen angeordnet werden können, damit die Teleskoprohre im Schnittpunkt der Stützbeinkästen 13 kreuzen können. Die Anbindungspunkte 14 für die Auslegerarme 12 sind unmittelbar an den Stützbeinkästen 13 angeordnet.

Die gesamte Tragstruktur 10 ist eine geschweißte Blechstruktur, d.h. die Tragstruktur 10 ist aus einer Vielzahl von Blechen, die durch Schweißnähte miteinander verbunden sind, gebildet. Dazu gehören u.a. die Seitenwänden 20 der Stützbeinkästen 13, das mehrfach gekantete Wandblech 21 des Kessels 16 und die Aufnahme 18 für das Drehlager 19, die als Lagerflansch ausgebildet ist.

Die Seitenwänden 20 der Stützbeinkästen 13 sind derart ausgebildet, dass sie im zusammengesetzten Zustand der Tragstruktur 10 einen Teil der Bewandung des Kessels 16 bilden, die durch das gekantete Wandblech 21 vervollständigt wird. Um eine gemeinsame Oberkante zu bilden, ragen die Seitenwände 20 im Bereich des Kessels 16 über die eigentlichen Stützbeinkästen 13 hinaus, wobei insbesondere dieser Teil der Seitenwände 20 derart ausgestaltet ist, dass sich eine möglichst geringe Kerbwirkung bei der zu erwartenden Belastung durch den Verteilermast 2 ergibt. Auf der Bewandung des Kessels 16 - also den fraglichen Teilen der Seitenwänden 20 und dem Wandblech 21 - ist die Aufnahme 18 befestigt, sodass die Aufnahme 18 die von der Bewandung des Kessels 16 gebildete zentrale Öffnung 17 umgibt. Die einzelnen Bauteile des Kessels 16 werden dabei durch Schweißnähte miteinander verbunden.

Die Seitenwänden 20 der Stützbeinkästen 13 sind einstückig ausgebildet und somit vollständig fügestellenfrei. Insbesondere sind keine vertikalen Fügestellen bzw. Schweißnähte innerhalb der Seitenwänden 20 vorgesehen, die durch die über die Aufnahme 18 in den Kessel 16 bzw. die Tragstruktur 10 eingebrachten Belastungen auf Scherung belastet werden würden. Die unmittelbar über die Aufnahme 18 in die Seitenwänden 20 eingeleiteten Kräfte werden so vorteilhaft über die gesamten Seitenwänden 20 verteilt, ohne dass dabei eine Fügestelle hochbelastet wird. Die in die übrige, durch das Wandblech 21 gebildete Wandung des Kessels 16 eingebrachte Belastungen werden über die Verbindungsschweißnähte in den Seitenwänden 20 eingebracht, können aber ebenfalls über die gesamten Seitenwänden verteilte werden.

Die beiden Seitenwände 20 stoßen im Bereich der Seitenkästen 13 unmittelbar aneinander und sind dort miteinander verschweißt. Oberhalb der Stützbeinkästen 13 ist zwischen den beiden Seitenwänden 20 ein Übergangsblech 22 vorgesehen, auf dem letztendlich ein Teil der Aufnahme 18 zum Liegen kommt. Das Übergangsblech 22 ist an beiden Seitenwänden 20 durch eine Schweißnaht befestigt.

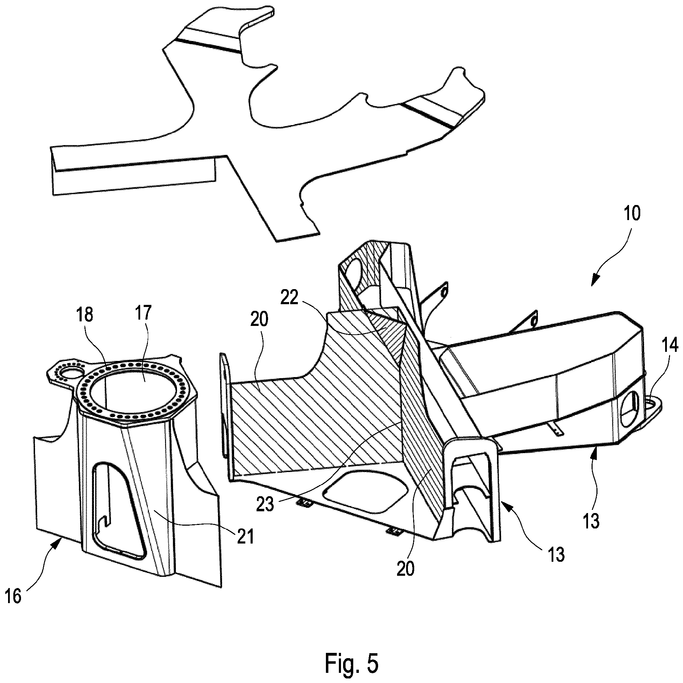

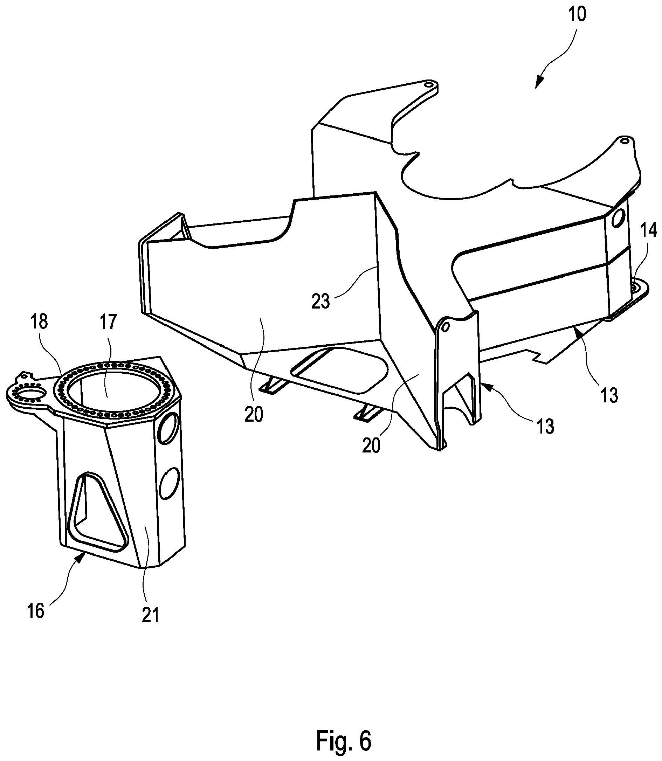

In Figuren 5 und 6 sind Ausführungsvarianten der Tragstruktur 10 aus Figuren 3 und 4a, b gezeigt. Dabei gleichen die Tragstrukturen 10 in weiten Teilen der vorstehend beschriebenen Struktur, weshalb im Folgenden lediglich auf die Unterschiede zu der in Figuren 3 und 4a, b dargestellten Tragstruktur 10 eingegangen wird. Im Übrigen gelten die Ausführungen zu den Figuren 1 bis 4 analog.

Bei der Ausführungsvariante gemäß Figur 5 haben die Seitenwände 20 bis hin zur Aufnahme 18 eine gemeinsame Stoßkante 23, an der sie auch miteinander verschweißt sind. Dennoch ist das Übergangsblech 22 als zusätzliche Versteifung vorgesehen.

In der Ausführungsvariante gemäß Figur 6 reicht die gemeinsame Stoßkante 23 der Seitenwände 20 ebenfalls bis zu Aufnahme 18. Ein Übergangsblech 22 ist hingegen nicht vorgesehen, da die übrige Konstruktion der Tragstruktur bereits ausreichend stabil und steif ist. Die Aufnahme 18 für das Drehlager 19 ist derart ausgebildet, dass es über den gesamten Umfang auf den Seitenwänden 20 oder dem Wandblech 21 aufliegt.

## Patentansprüche

1. Tragstruktur (10) für eine mobile Betonpumpe (1) zur Anbindung eines Verteilermastes (2) umfassend zwei diagonal einander kreuzende Stützbeinkästen (13), und einem daran befestigten Mastbock (15) mit einen Kessel (16), der eine Öffnung (17) aufweist, die an ihrem einen Ende wenigstens teilweise von einer Aufnahme (18) für ein Drehlager (19) zum Verschwenken des Verteilermastes (2) der Betonpumpe (1) gegenüber dem Kessel (16) umgeben ist,
**dadurch gekennzeichnet, dass**
je ein Teil der Bewandung des Kessels (16) durch eine Seitenwand (20) der einander kreuzenden Stützbeinkästen (13) gebildet ist, wobei die Seitenwände (20) der Stützbeinkästen (13) im einem ersten Bereich, in dem sie einen Teil der Bewandung des Kessels (16) bilden, derart frei von Fügestellen ist, dass über den Kessel (16) unmittelbar in die Seitenwände (13) eingeleitete Belastungen über den ersten Bereich hinaus ohne Scherbelastung einer Fügestelle in den Seitenwänden (13) verteilt werden.

2. Tragstruktur nach Anspruch 1,
**dadurch gekennzeichnet, dass**
die Seitenwände (20) der Stützbeinkästen (13) vollständig frei von Fügestellen sind, die durch die über den Kessel (16) unmittelbar in die Seitenwände (13) eingeleitete Belastungen auf Scherung belastet werden.

3. Tragstruktur nach Anspruch 1 oder 2,
**dadurch gekennzeichnet, dass**
die beiden jeweils Teile der Bewandung des Kessels (16) bildenden Seitenwände (20) der Stützbeinkästen (13) über eine gemeinsame Stoßkante (23) unmittelbar miteinander verbunden sind.

4. Tragstruktur nach Anspruch 1 oder 2,
**dadurch gekennzeichnet, dass**
zwischen den beiden Seitenwänden (22) ein Übergangsblech (22) vorgesehen ist, der einen Teil der Bewandung des Kessels (16) bildet.

5. Tragstruktur nach einem der vorhergehenden Ansprüche,
**dadurch gekennzeichnet, dass**
sich wenigstens eine, vorzugsweise beide Seitenwände (20) über den jeweiligen Stützbeinkasten (13) hinaus fügestellenfrei bis zur Aufnahme (18) für das Drehlager (19) erstrecken.

6. Tragstruktur nach Anspruch 4,
**dadurch gekennzeichnet, dass**
die Formgebung der über den Stützbeinkasten (13) hinaus erstreckenden Teile der Seitenwände (20) eine möglichst geringe Kerbwirkung aufweist.

7. Tragstruktur nach einem der vorhergehenden Ansprüche,
**dadurch gekennzeichnet, dass**
die Wandung des Kessels (16) in den Bereichen, abseits der durch die Seitenwände (20) der Stützbeinkästen (13) gebildeten Teile, durch ein einstückiges ein- oder mehrfach gekantetes oder gerundetes Blech (21) gebildet ist, wobei das Blech (21) vorzugsweise durch Schweißen mit den Stützbeinkästen (13) verbunden ist.

8. Tragstruktur nach einem der vorhergehenden Ansprüche,
**dadurch gekennzeichnet, dass**
die Aufnahme (18) für ein Drehlager (19) als, vorzugsweise vollständig umlaufender Lagerflansch ausgebildet ist, der vorzugsweise auf der Bewandung des Kessels (16) aufliegt und mit diesem weiter vorzugsweise verschweißt ist.

9. Mobile Betonpumpe (1) umfassend einer auf einem fahrbaren Unterbau (3) befestigten Tragstruktur (10) mit an der Tragstruktur angeordneten ausfahrbare Stützbeine (11) zum Abstützen der Betonpumpe (1) auf dem Boden und einem drehbar an der Tragstruktur (10) gelagerten Verteilermast (3), **dadurch gekennzeichnet, dass**
die Tragstruktur (10) nach einem der vorhergehenden Ansprüche ausgestaltet ist.
